# EUROPEAN PATENT SPECIFICATION

(11) **EP 2 551 516 B1**
(45) Date of publication and mention of the grant of the patent: **02.10.2013**
(21) Application number: 11175586.4
(22) Date of filing: 27.07.2011
(51) Int. Cl.: F03D 11/00

(54) **Arrangement and method to provide electrical power to a sensor**
Anordnung und Verfahren zur Versorgung eines Sensors mit elektrischem Strom
Agencement et procédé pour fournir un alimentation électrique à un capteur

(43) Date of publication of application: 30.01.2013
(73) Proprietor: Siemens Aktiengesellschaft, 80333 München (DE)
(72) Inventor: Stege, Jason, 7330 Brande (DK)

(56) References cited:
- EP-A2- 1 788 240
- WO-A1-2010/123461
- DE-A1-102007 006 966
- DE-A1-102009 039 490

## Description

The invention relates to an arrangement and to a method to provide electrical power to a sensor, which is arranged asides the blade of a wind turbine.

It is known to use sensors, which are arranged at or within the blade of a wind turbine, to measure the deflection or to measure the bending of the blade caused by the wind load, for example. Such arrangements are for example known from WO 2010/123461.

Even other types of sensors are used asides the blade for evaluation purposes, like strain gauges, accelerometers, gyroscopes, magnetometers, temperature-sensors or pressure sensors.

The used sensors are often supplied with electrical power. For this purpose electrical supply-cables needs to be arranged asides the blade.

The cables might be arranged and guided inside the fiberglass-material, which is used to build up the blade. It is even possible to guide the cables inside the blade, while a cavity inside the blade might be used for the cable-transfer.

The cables cause an increased lightning risk. If a lightning strikes the blade the cables might be damaged. Additionally the surface of the blade and/or an inner part of the blade, which are used to guide the cables, might be damaged, too.

As described above the cables needs to be arranged during the manufacturing of the blade. Thus a higher amount of careful work needs to be spent to achieve the power-supply. This is in turn extensive in time and thus expensive.

It is even known to use an accumulator or an electrical-battery to supply the sensor with power. In this case the battery is normally arranged close to the sensor. Especially for deflection measurements the sensor is often arranged close to the tip-end of the blade.

The battery has a limited lifespan only, thus it needs to be replaced in certain periods of time.

This replacement is difficult as experienced service-personal has to climb into the blade to reach the battery there. This work is time-consuming and thus cost-expensive.

There are only a limited number of days for maintenance-work, especially for an offshore wind turbine. Thus the replacement-work needs to done in view to a redundant time-period in view to the load of the battery. Thus bad weather conditions needs to be kept in mind, which might prevent the regular maintenance-work.

There are further problems which need to be addressed, too. For a combination of a "wireless" sensor with a battery there is the need to optimize the power consumption of the sensor in view to a prolonged or even maximized life of the battery. Several methods are known for this purpose: for example the sampling frequency of sensor-measurements is decreased or the measured data are gathered and stored. The stored data are only transferred to the wind turbine, to the operator, ..., only time-by-time to reduce the amount of power needed for the transmission.

Low power microcontrollers are used in combination with a sensor as described above with all known resulting limitations of a resulting data-system.

So called "real time sensors" need a lot of electrical power to gather and to transfer measured sensor-data. But real-time-data are required for a real time control of the wind turbine.

On the other hand the time-by-time-transfer of data is only useful for lifetime calculations or for broad studies, where the data might be combined with the data of other sources.

It is even known to generate electrical power for a sensor as described above by help of piezoelectric-components or by help of components, which use thermal-effects or inductive-effects to generate electrical power.
Most of them are not sufficient enough as they generate electrical power based on the quite low frequency of the turning blades of the wind turbine.

It is the aim of the invention to provide an improved arrangement and an improved method to provide electrical power for a sensor, which is arranged asides the blade of a wind turbine.

According to the invention the sensor is arranged asides the blade of a wind turbine. A capacitor is connected with the sensor and provides electrical power to the sensor. The capacitor is used as a rechargeable battery or accumulator.

Preferably the capacitor is arranged quite close to the sensor. The needed electrical supply-wires are kept quite short. Thus the risk of a lightning strike into the wires is reduced.

The capacitor is connected with a generator, which is driven by compressed air. Thus the generator provides electrical power to the capacitor.

Preferably the generator is arranged quite close to the sensor and to the capacitor. The needed electrical supply-wires are kept quite short. Thus the risk of a lightning strike into the wires is reduced.

Preferably a so called "microturbine"-generator is prepared, arranged and used as generator. This generator shows small dimensions and thus a small size. It can be arranged asides the blade quite easily.
The generator provides the amount of electrical power needed and due to its small size the fixation and the positioning of the generator asides the blade is quite easy, too.

The generator is connected with a hose or with a flexible tube, which are used to guide the compressed air to the generator.

Preferably the compressed air is produced as asides the nacelle or the hub of the wind turbine.

Preferably the compressed air is guided within a non-conductive hose or tube, thus any lightning risk is avoided.

Preferably the compressor, which is used to produce the compressed air, is controlled automatically and based on a power-level, which is measured asides the capacitor.

Preferably a control-sensor is used for this purpose, which transfers the measured power-level wireless or by radio to the compressor or to an automatic-control, which is assigned to the compressor for its control.

The invention allows the power-supply of a sensor, which is arranged asides the blade, without any lightning risks.

As the power supply is quite effective it is even possible to use a microcontroller asides the blade for the storage or evaluation or for the transmission of measured sensor-data. The invention allows an active turbine control, based on the sensor asides the blade.

The invention is shown in more detail by help of figures.
The figures show only a preferred configuration of the invention and thus do not limit the scope or the principle of the invention.
- FIG 1: shows a wind turbine, which is prepared to comprise the arrangement according to the invention, and
- FIG 2: shows more details of the arrangement invented and in reference to FIG 1.

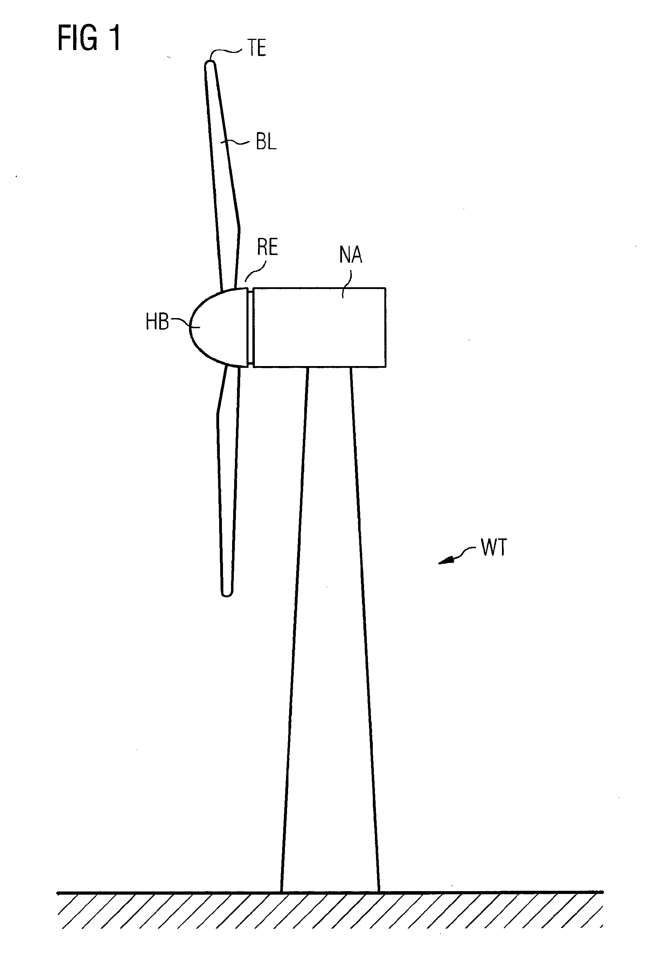

FIG 1 shows a wind turbine WT, which is prepared to comprise the arrangement according to the invention.

The wind turbine WT comprises a nacelle NA, a blade BL and a hub HB.

The blade BL is connected with the hub HB via its root-end RE, while its tip-end TE defines in reference to the root-end RE the length of the blade.

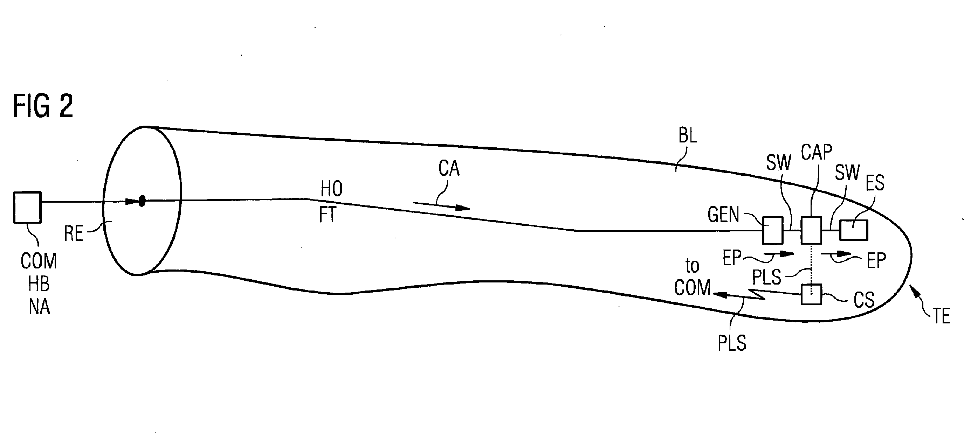

FIG 2 shows more details of the invention, even in reference to FIG 1.

An electrical sensor ES is arranged asides the blade BL of the wind turbine WT.

A capacitor CAP is connected with the sensor ES. The capacitor CAP is arranged and prepared to supply electrical power EP to the sensor ES.

The capacitor CAP is connected with a generator GEN, which is prepared to be driven by compressed air CA. The generator GEN produces electrical power EP for the capacitor CAP.

The generator GEN is connected with a compressor COM, which is prepared to produce the compressed air CA.

The sensor ES is arranged at the tip-end TE of the blade BL.

The compressor COM is arranged in a distance to the blade BL, it is preferably arranged within the nacelle NA or within the hub HB of the wind turbine WT.

The compressor COM is connected with the generator GEN via a hose HO or via a flexible tube FT, which are used to guide the compressed air CA to the generator GEN.

Preferably the hose HO or the flexible tube FT is made of an electrical-non-conductive material.

The capacitor CAP is arranged close to the sensor ES to reduce the needed length of electrical supply-wires SW.

The generator GEN is arranged close to the sensor ES and close to the capacitor CAP to reduce the needed length of electrical supply-wires SW.

The compressor CAP is prepared to be controlled automatically, based on a power-level-signal PLS, which is measured asides the capacitor CAP by a control-sensor CS.

The control-sensor CS is arranged to measure the power-level-signal PLS. This signal PLS is transferred wireless to the compressor COM or to an automatic-control (not shown here), which is assigned to the compressor COM for its control.

## Claims

1. Arrangement to provide electrical power to a sensor (ES),
- wherein the sensor (ES) is arranged asides the blade (BL) of a wind turbine (WT),
- wherein a capacitor (CAP) is connected with the sensor (ES),
- wherein the capacitor is arranged and prepared to supply electrical power (EP), to the sensor (ES),
- wherein the capacitor (CAP) is connected with a generator (GEN),
- wherein the generator is prepared to be driven by compressed air (CA) to produce electrical power for the capacitor (CA), and
- wherein the generator (GEN) is connected with a compressor (COM), which is prepared to produce compressed air (CA).

2. Arrangement according to claim 1, wherein the sensor is arranged at the tip-end of the blade.

3. Arrangement according to claim 1 or to claim 2, wherein the compressor is arranged in a distance to the blade.

4. Arrangement according to claim 3, wherein the compressor is arranged within the nacelle or within the hub of the wind turbine.

5. Arrangement according to one of the claims 1 to 4, wherein the compressor is connected with the generator via a hose or via a flexible tube, which are used to guide the compressed air to the generator.

6. Arrangement according to claim 5, wherein the hose or tube is made of an electrical-non-conductive material.

7. Arrangement according to one of the claims 1 to 6, wherein the capacitor is a rechargeable battery or an accumulator.

8. Arrangement according to one of the claims 1 to 7, wherein the capacitor is arranged close to the sensor to reduce the needed length of electrical supply-wires.

9. Arrangement according to one of the claims 1 to 8, wherein the generator is arranged close to the sensor and close to the capacitor to reduce the needed length of electrical supply-wires.

10. Arrangement according to one of the claims 1 to 9,
wherein the compressor is prepared to be controlled automatically.

11. Arrangement according to claim 10, wherein the compressor is prepared to be controlled automatically and based on a power-level-signal, which is measured asides the capacitor by a control-sensor.

12. Arrangement according to claim 11, wherein the control-sensor is arranged to measure the power-level-signal and wherein the control-sensor is prepared to transfer the measured power-level-signal wireless to the compressor or to an automatic-control, which is assigned to the compressor for its control.

13. Method to provide electrical power to a sensor (ES), which is arranged asides the blade (BL) of a wind turbine (WT),
- wherein the sensor is electrically supplied by a capacitor (CAP), and
- wherein the capacitor (CA) is electrically supplied by a generator (GEN), which is driven by compressed air (CA).

## Patentansprüche

1. Anordnung zum Versorgen eines Sensors (ES) mit elektrischem Strom,
- wobei der Sensor (ES) an dem Blatt (BL) einer Windenergieanlage (WT) angeordnet ist,
- wobei ein Kondensator (CAP) mit dem Sensor (ES) verbunden ist,
- wobei der Kondensator so angeordnet und ausgelegt ist, dass er den Sensor (ES) mit elektrischem Strom (EP) versorgt,
- wobei der Kondensator (CAP) mit einem Generator (GEN) verbunden ist,
- wobei der Generator so ausgelegt ist, dass er über Druckluft (CA) zum Erzeugen von elektrischem Strom für den Kondensator (CAP) betrieben wird, und
- wobei der Generator (GEN) mit einem Kompressor (COM) verbunden ist, der so ausgelegt ist, dass er Druckluft (CA) erzeugt.

2. Anordnung nach Anspruch 1, bei der der Sensor am Spitzenende des Blattes angeordnet ist.

3. Anordnung nach Anspruch 1 oder 2, bei der der Kompressor in einem Abstand zum Blatt angeordnet ist.

4. Anordnung nach Anspruch 3, bei der der Kompressor in der Gondel oder in der Nabe der Windenergieanlage angeordnet ist.

5. Anordnung nach einem der Ansprüche 1 bis 4, bei der der Kompressor über einen Schlauch oder ein flexibles Rohr zum Leiten der Druckluft zu dem Generator mit dem Generator verbunden ist.

6. Anordnung nach Anspruch 5, bei der der Schlauch oder das Rohr aus einem elektrisch nichtleitenden Material hergestellt ist.

7. Anordnung nach einem der Ansprüche 1 bis 6, bei der es sich bei dem Kondensator um eine wiederaufladbare Batterie oder einen Akkumulator handelt.

8. Anordnung nach einem der Ansprüche 1 bis 7, bei der der Kondensator nahe bei dem Sensor angeordnet ist, um die erforderliche Länge von Stromversorgungskabeln zu reduzieren.

9. Anordnung nach einem der Ansprüche 1 bis 8, bei der der Generator nahe bei dem Sensor und dem Kondensator angeordnet ist, um die erforderliche Länge von Stromversorgungskabeln zu reduzieren.

10. Anordnung nach einem der Ansprüche 1 bis 9, bei der der Kompressor so ausgelegt ist, dass er automatisch gesteuert wird.

11. Anordnung nach Anspruch 10, bei der der Kompressor so ausgelegt ist, dass er automatisch auf der Grundlage eines Strompegelsignals gesteuert wird, das an dem Kondensator von einem Steuersensor gemessen wird.

12. Anordnung nach Anspruch 11, bei der der Steuersensor so angeordnet ist, dass er das Strompegelsignal misst, und so ausgelegt ist, dass er das gemessene Strompegelsignal drahtlos zum Kompressor oder zu einer automatischen Steuerung überträgt, die dem Kompressor zwecks seiner Steuerung zugeordnet ist.

13. Verfahren zum Versorgen eines Sensors (ES), der an dem Blatt (BL) einer Windenergieanlage (WT) angeordnet ist, mit elektrischem Strom,
- wobei der Sensor von einem Kondensator (CAP) mit Strom versorgt wird und
- wobei der Kondensator (CAP) von einem über Druckluft (CA) betriebenen Generator (GEN) mit Strom versorgt wird.

## Revendications

1. Un agencement destiné à fournir du courant électrique à un capteur (ES)
- dans lequel le capteur (ES) est agencé à côté de la pale (BL) d'une turbine éolienne (WT),
- dans lequel un condensateur (CAP) est raccordé au capteur (ES),
- dans lequel le condensateur est agencé et préparé de façon à fournir du courant électrique (EP) au capteur (ES),
- dans lequel le condensateur (CAP) est raccordé à un générateur (GEN),
- dans lequel le générateur est préparé de façon à être entraîné par de l'air comprimé (CA) de façon à produire du courant électrique pour le condensateur (CA), et
- dans lequel le générateur (GEN) est raccordé à un compresseur (COM), qui est préparé de façon à produire de l'air comprimé (CA).

2. L'agencement selon la revendication 1, dans lequel le capteur est agencé à l'extrémité de la pale.

3. L'agencement selon la revendication 1 ou 2, dans lequel le compresseur est agencé à une certaine distance de la pale.

4. L'agencement selon la revendication 3, dans lequel le compresseur est agencé à l'intérieur de la nacelle ou à l'intérieur du moyeu de la turbine éolienne.

5. L'agencement selon l'une quelconque des revendications 1 à 4, dans lequel le compresseur est raccordé au générateur par l'intermédiaire d'un tuyau ou par l'intermédiaire d'un tube flexible, qui sont utilisés pour guider l'air comprimé vers le générateur.

6. L'agencement selon la revendication 5, dans lequel le tuyau ou le tube sont composés d'un matériau électrique non conducteur.

7. L'agencement selon l'une quelconque des revendications 1 à 6, dans lequel le condensateur est une batterie rechargeable ou un accumulateur.

8. L'agencement selon l'une quelconque des revendications 1 à 7, dans lequel le condensateur est agencé à proximité du capteur de façon à réduire la longueur nécessaire des câbles d'alimentation électrique.

9. L'agencement selon l'une quelconque des revendications 1 à 8, dans lequel le générateur est agencé à proximité du capteur et à proximité du condensateur de façon à réduire la longueur nécessaire des câbles d'alimentation électrique.

10. L'agencement selon l'une quelconque des revendications 1 à 9, dans lequel le compresseur est préparé de façon à être régulé automatiquement.

11. L'agencement selon la revendication 10, dans lequel le compresseur est préparé de façon à être régulé automatiquement et en fonction d'un signal de niveau de puissance qui est mesuré à côté du condensateur par un capteur de régulation.

12. L'agencement selon la revendication 11, dans lequel le capteur de régulation est agencé de façon à mesurer le signal de niveau de puissance et dans lequel le capteur de régulation est préparé de façon à transférer le signal de niveau de puissance mesuré de manière non filaire au compresseur ou à un système de régulation automatique qui est attribué au compresseur pour sa régulation.

13. Un procédé destiné à fournir du courant électrique à un capteur (ES), qui est agencé à côté de la pale (BL) d'une turbine éolienne (WT),
- dans lequel le capteur est alimenté électriquement par un condensateur (CAP), et
- dans lequel le condensateur (CA) est alimenté électriquement par un générateur (GEN) qui est entraîné par de l'air comprimé (CA).
